# EUROPÄISCHE PATENTANMELDUNG

(11) **EP 2 075 114 A2**
(43) Veröffentlichungstag der Anmeldung: **01.07.2009**
(21) Anmeldenummer: 08011837.5
(22) Anmeldetag: 01.07.2008
(51) Int. Cl.: B31D 1/02, G09F 3/02

(54) **Verfahren zur Individualisierung von Etiketten**

(30) Priorität: 20.12.2007 DE 102007062426
(71) Anmelder: tesa scribos GmbH, 69126 Heidelberg (DE)
(72) Erfinder: Dietrich, Christoph Dr., 69126 Heidelberg (DE); Noehte, Steffen Dr., 69469 Weinheim (DE)
(74) Vertreter: Stubbe, Andreas

(57) **Zusammenfassung**

Verfahren zur Individualisierung von Etiketten, bei dem eine Mehrzahl von Etiketten aus einem Etikettenband ausgebildet wird, **dadurch gekennzeichnet, dass** die Form jedes Etiketts individuell ausgebildet wird.

## Beschreibung

Die vorliegende Erfindung betrifft ein Verfahren zur Individualisierung von Etiketten gemäß dem Oberbegriff Anspruch 1 sowie ein Etikett gemäß dem Oberbegriff von Anspruch 12.

Bei einem Etikett handelt es sich üblicherweise um eine Schichtanordnung begrenzter Ausdehnung, die zu Kennzeichnungszwecken eingesetzt wird. Insbesondere sind bei einem Etikett Länge und Breite größer als die Dicke der Schichtanordnung ausgebildet. Ein Etikett weist vorteilhaft aber nicht zwingend eine Klebstoffschicht zur Aufbringung auf einem zu kennzeichnenden Gegenstand und gegebenenfalls einen Liner zum Schutz der Klebeschicht auf. Als Etikettenband wird vorliegend ein Bogen oder ein Band des Etikettenmaterials bezeichnet. Das Etikettenband umfasst gegebenenfalls zusätzlich einen Träger. Aus einem Etikettenband können mehrere Etiketten durch Schneiden oder Stanzen des Etikettenbandes gewonnen werden.

Aus dem Stand der Technik ist es bekannt, Schildersätze in Form von Etikettensets anzubieten, bei denen die einzelnen zum Set gehörenden Etiketten zum einen eine beliebige Information aufgedruckt auf einer Informationsschichtanordnung aufweisen und zum anderen unterschiedlich geformt sind, also eine unterschiedliche äußere Form aufweisen (WO 2006/108269 A1). Die Formgebung richtet sich nach dem für das jeweilige Etikett vorgesehenen Autbringungsort und soll die Gefahr von Verwechslungen bei der Positionierung des einzelnen Etiketts verringern. Die Schildersätze selbst sind jedoch gleichartig ausgebildet und unterscheiden sich von den weiteren Schildersätzen nur durch unterschiedliche Information die sie tragen.

Bezüglich Sicherheitskennzeichnungen jeglicher Art, die zur Sicherung von Produkten oder Verpackungen bspw. gegen Fälschung zum Einsatz kommen, besteht der Wunsch, eine einfache Verifikation der Echtheit der Sicherheitskennzeichnung auch ohne Hilfsmittel ggf. sogar durch den Endkunden vorzunehmen. Merkmale, die dies erlauben, werden auch als so genannte Level-1- Sicherheitsmerkmale bezeichnet.

Als Level-1-Sicherheitsmerkmal wird ein Merkmal bezeichnet, das mit bloßem Auge sichtbar und ohne weiteres Hilfsmittel verifizierbar ist, beispielsweise Kennungen wie Logos oder Seriennummern, die bei Tageslicht auslesbar sind. Als Level-2-Sicherheitsmerkmal wird ein Merkmal bezeichnet, das mit einfachen beziehungsweise Standardhilfsmitteln (z.B. einer Lupe, einer UV-Lampe, einem Barcodelesegerät) verifizierbar ist. Als Level-3-Sicherheitsmerkmal wird ein Merkmal bezeichnet, das nur mit einer Spezialausrüstung verifizierbar ist. Insbesondere die Speicherung von individualisierten holographischen Daten kann als Level-3-Sicherheitsmerkmal oder bei digitalen holographischen Daten auch als Levol-4-Sicherheitsmerkmal erfolgen. Zur Verifikation eines Level-4-Sicherheitsmerkmals ist zusätzliches Wissen bezüglich des Sicherheitsmerkmals erforderlich, wie zum Beispiel ein digitaler Code.

Insbesondere bei den Level-1-Sicherheitsmerkmalen besteht ein Problem darin, dass die Prüfung auf Echtheit meist durch Personen durchgeführt wird, die nicht in die technischen Einzelheiten des Merkmals eingeweiht sind. Aus diesem Grund ist es vorteilhaft Merkmale zu finden, die auf der einen Seite technisch anspruchsvoll und damit schwer zu fälschen auf der anderen Seite jedoch so leicht zu kommunizieren sind, dass sie sich schnell einprägen oder im besten Fall sogar intuitiv selbsterklärend sind.

Aus der Praxis ist ein derartiges Merkmal unter der Bezeichnung Holospot® in Form speziell gestalteter Etiketten bekannt. Der Holospot® weist ein Merkmal des Sicherheitslevels 1 auf, das auch ohne Hilfsmittel asslesbar ist. Mit sehr hoher Auflösung wird eine diffraktiv schillernde Seriennummer so auf ein Etikett geschrieben, dass diese mit bloßem Auge erkennbar ist und jeder Anwender ohne Hilfsmittel prüfen kann, ob das Schillern und die Verschiedenhaftigkeit der Seriennummern von Produkt zu Produkt gegeben sind.

Ferner ist es aus dem Stand der Technik bekannt, dass Information oftmals codiert beispielsweise in Form eines computergenerierten Hologramms in eine Speicherschichtanordnung eines Etiketts eingebracht wird (DE 100 39 370 A1; DE 101 28 902 A1). Derartige computergenerierte Hologramme bestehen aus einer oder mehreren Schichten von Punktematrizen beziehungsweise Punkteverteilungen, die bei einer Belichtung mit einem vorzugsweise kohärenten Lichtstrahl zu einer Rekonstruktion der in dem Hologramm codierten Information führen. Die Punkteverteilung kann dabei als Amplitudenhologramm oder Phasenhologramm ausgebildet sein und beispielsweise als Kinoform-, Fourier- oder Fresnel-Hologramm oder in einer beliebigen anderen Codierungsstruktur berechnet sein. Zur Herstellung von computergenerierten Hologrammen werden diese zuerst berechnet und anschließend mit einer geeigneten Schreibvorrichtung, in der Regel einem Laserlithographen, durch punktweises Einbringen von Energie oder durch eine flächige Belichtung in den Datenspeicher eingeschrieben. Prinzipiell ergeben sich somit zwei unterschiedliche Verfahren zur Speicherung von computergenerierten Hologrammen (CGH):
1. Ein CGH kann durch die Änderung der lokalen Eigenschaften beispielsweise eines Polymerträgers als Phasenhologramm gespeichert werden.
2. Ein CGH kann durch eine Strukturierung beispielsweise einer Aluminiumschicht in dieser gespeichert werden. Die Speicherung kann in Form eines Amplitudenhologramms (Löcher in der Aluminiumschicht) oder eines Phasenhologramms durch Deformation der Aluminiumschicht (Reliefhologramme) erfolgen. Diese Strukturierung geht gegebenenfalls einher mit einer Deformation angrenzender Materialien, wie Polymerträger, Kleber oder dergleichen.

Die Berechnung der computergenerierten Hologramme kann individuell, also für jedes zu kennzeichnende Objekt einzigartig erfolgen. Die Auflösung der Punktematrix eines computergenerierten Hologramms kann im Bereich bis unterhalb von 0,1 µm liegen. Somit können auf engem Raum Hologramme mit einer hohen Auflösung geschrieben werden, deren Information durch Beleuchten mit einem Lichtstrahl und Rekonstruktion des Beugungsbildes ausgelesen werden kann. Die Größe der Hologramme kann dabei zwischen weniger als 1 mm² und mehreren cm² betragen.

Bei den bekannten Etiketten spielt die Individualisierung der einzelnen Etiketten eine sehr wichtige Rolle, da sie immer unabhängig von der jeweiligen Herstellungstechnik des Etiketts mit einem höheren Aufwand verbunden ist, als eine Gleichartigkeit von Etiketten. Ferner ist die Individualisierung, insbesondere in Form einer Seriennummer, als Unterscheidungsmerkmal leicht kommunizierbar und damit in der breiten Anwendung prüfbar. Da es sich jedoch nach wie vor um ein Merkmal handelt, welches durch ungeschulte Personen ausgelesen wird, besteht immer wieder der Wunsch, diese Ebene bei Beibehaltung einer klaren und einfachen Kommunikation und Verifikation technisch komplexer und anspruchsvoller zu gestalten, um ein Nachahmen zu erschweren.

Der vorliegenden Erfindung liegt das Problem zugrunde, Etiketten einfach erkennbaren Sicherheitsmerkmalen sowie Verfahren zur Herstellung derartiger Etiketten anzugeben.

Das vorliegende Problem wird bei einem Verfahren zur Individualisierung von Etiketten mit den Merkmalen des Oberbegriffs von Anspruch 1 durch die Merkmale des kennzeichnenden Teils von Anspruch 1 gelöst. Eine nebengeordnete Lösung wird durch ein Etikett gemäß Anspruch 12 beschrieben. Vorteilhafte Ausgestaltungen und Weiterbildungen sind Gegenstand der jeweiligen Unteransprüche.

Entscheidend für eine leichte Verifikation eines Sicherheitsmerkmals, beispielsweise durch Verbraucher, ist eine möglichst einfache Wahrnehmung des Sicherheitsmerkmals. Dies wird vorliegend dadurch erreicht, dass jedes aus einem Etikettenband hergestellte Etikett eine individuelle Form, also eine individuelle äußere Gestalt, erhält. Die individuelle Änderung der äußeren Gestalt wird zum einen schnell wahrgenommen werden und ist darüber hinaus auch einfach zu kommunizieren. Aufwendige Schulungen und Informationskampagnen zur Kommunikation eines derartigen Sicherheitsmerkmals sind nicht unbedingt erforderlich.

Die Ausbildung der individuellen Form eines jeden Etiketts erfolgt vorzugsweise durch an sich bekannte Verfahren wie individuelles Schneiden oder Stanzen der Etikettenbahn. Beispiele hierfür sind Stanztechniken, mit wechselnden Stanzformen, oder auch Klingenschnitte, wie sie in Schneidplottern zum Einsatz kommen, aber auch IR-Schneiden oder Wasserstrahlschneiden. In ganz bevorzugter Ausgestaltung erfolgt die Ausbildung der individuellen Form laserlithographisch, also mittels eines Lasers, dessen Strahl über die Etikettenbahn scannt und dabei die gewünschte Form schneidet. Zur Realisierung eignen sich beispielsweise Lasersysteme gemäß der EP 1 837 171 A1 sowie der US 6,860,050 B2 in Kombination mit geeigneten optischen Scanneinheiten. Insbesondere ist es auch möglich eine Etikettenbahn derart zu schneiden, dass das das Etikett bildende Material selbst sowie eine ggf. vorgesehene Klebeschicht in der gewünschten Weise geschnitten wird, eine darunter liegende Trägerschicht jedoch im Wesentlichen unversehrt bleibt. Diese Ausgestaltung ermöglicht das Ausgittern und/oder Spenden der Etiketten auf besonders einfache Weise.

Besonders vorteilhaft ist dann auch eine Ausgestaltung, bei der die Form des Etiketts zum Träger einer zusätzlichen Information wird. Als Zusatzinformation in diesem Sinne wird eine Information bezeichnet, die durch die Form des Etiketts vorgegeben wird und je nach Ausgestaltung mit mehr oder weniger aufwendigen Verfahren ausgelesen werden kann. Eine solche Zusatzinformation kann beispielsweise eine Ausgestaltung des Etiketts in alphanumerischer Form sein, also dergestalt dass das Etikett in seiner Form alphanumerische Zeichen wiedergibt. Eine solche Ausgestaltung ist für jedermann sofort erkennbar. Sofern die Information zudem mit anderer auf dem Etikett vorgesehenen Information, beispielsweise einer Bedruckung, gekoppelt ist, ist zudem eine sofortige Überprüfung möglich. Die Zusatzinformation kann aber auch oder zusätzlich so vorgesehen sein, dass sie nur mit speziellen Geräten auslesbar ist. Hier eignet sich beispielsweise eine Gestaltung des Etiketts ähnlich einem Barcode. Das Etikett kann an seinem Rand oder auch im Inneren eine oder mehrere Ausnehmungen aufweisen, die nach dem Prinzip eines Barcodes eine verschlüsselte Zusatzinformation darstellen. Hier sind spezielle Kenntnisse und Lesegeräte erforderlich, um die Zusatzinformation auszuwerten. Weiterhin kann vorgesehen sein, dass die Zusatzinformation versteckt angeordnet ist. Dies ist beispielsweise dann der Fall, wenn durch die Fläche des Etiketts eine Information verschlüsselt wird. Die Fläche ist durch die individuelle Formgebung des Etiketts frei einstellbar und kann somit zur Informationswiedergabe verwendet werden, ohne dass dies für Dritte erkennbar ist. Auch in diesem Fall sind dann spezielle Geräte zur Entschlüsselung der Information, also zur Auswertung der Fläche sowie zur Codierung, erforderlich.

In besonders bevorzugter Ausgestaltung des Verfahrens wird die Form des Etiketts sowie die ggf. vorgesehene Zusatzinformation von einem computergesteuerten System vorgegeben und in einer Datenbank bezüglich eines jeden einzelnen Etiketts hinterlegt. Dadurch wird eine Möglichkeit geschaffen, auch zu einem späteren Zeitpunkt zu überprüfen, inwiefern ein spezielles Etikett jemals hergestellt wurde und ob es sich somit um ein Original handeln kann. Besonders bevorzugt wird die Form des Etiketts mit weiteren Informationen hinsichtlich des Etiketts, insbesondere mit auf dem Etikett eingebrachter Primärinformation zusammen hinterlegt. Primärinformation ist solche Information die auf dem Etikett selbst angeordnet ist, beispielsweise in Form einer Bedruckung, einer Laserbeschriftung, eines computergenerierten Hologramms oder dergleichen. Die Primärinformation kann insbesondere Daten wie Seriennummern, Angaben zu Herstellungs- und Vertriebswegen, Produktserien etc. enthalten.

In besonders bevorzugter Ausgestaltung wird die individuelle Form jedes Etikett mit weiteren individuellen Merkmalen eines Etiketts korreliert werden kann. Diese weiteren Merkmale können vielfältig sein, besonders bevorzugt ist jedoch die Korrelation mit einer Primärinformation, die beispielsweise als Bedruckung, als Hologramm, als Prägung, als Lasermarkierung und insbesondere als computergeneriertes Hologramm vorliegen kann. Die durch die Form ausgebildete Zusatzinformation kann die Primärinformation beispielsweise teilweise oder auch vollständig in unverschlüsselter oder verschlüsselter Form wiedergeben. Durch eine derartige Redundanz kann, insbesondere wenn auch die Primärinformation technisch komplex ist, wie zum Beispiel ein computergeneriertes Hologramm, der Fälschungsschutz eines jeden Etiketts deutlich erhöht werden. Durch die Korrelation zu einem typischen Sicherheitsmerkmal, hier bevorzugt mit den Sicherheitsmerkmalen eines individuellen computergenerierten Hologramms (offene diffraktive Nummer - Level-1-Sicherheitsmerkmal, diffraktive Mikroschrift - Level-2-Sicherheitsmerkmal, Projektionshologramm mit analogem Inhalt - Level-3-Sicherheitsmerkmal und Projektionshologramm mit digitalem Inhalt - Level-4-Sicherheitsmerkmal), wird die individuell ausgebildete Form des Etiketts zusätzlich abgesichert und kann damit ebenfalls als Sicherheitsmerkmal bezeichnet werden.

Bei einer Ausgestaltung der Primärinformation als computergeneriertes Hologramm ist die laserlithographische Ausbildung der individuellen Form des Etiketts besonders vorteilhaft. In diesem Fall kann derselbe Laserlithograph sowohl die Primärinformation in das Etikettenband einbringen als auch das jeweilige Etikett in dem Etikettenband individuell ausbilden. Zusätzliche Schneidegeräte sind somit nicht erforderlich.

In weiter bevorzugter Ausgestaltung des Verfahrens ist die in dem Etikettenband befindliche Primärinformation maschinenlesbar ausgebildet. Zur Individualisierung der einzelnen Etiketten wird dann bevorzugt zunächst diese Primärinformation ausgelesen und in Abhängigkeit von der Primärinformation erfolgt die individuelle Formgebung für jedes einzelne Etikett. Insbesondere kann somit auch eine nicht lesbare Primärinformation direkt dadurch aussortiert werden, dass an dieser Stelle kein Etikett ausgebildet wird. Vielmehr verbleibt das Etikettenband in diesem Bereich unversehrt.

Beim Ausgittern der Etiketten wird dieser Bereich dann zusammen mit dem üblichen Verschnitt entfernt, ein unlesbares Etikett wird jedoch vermieden. Die Bestimmung der jeweiligen Etikettenform in Abhängigkeit von der Primärinformation kann beispielsweise dahingehend erfolgen, dass ein Teil der Primärinformation oder die vollständige Primärinformation durch die Form des jeweiligen Etiketts offen lesbar oder verschlüsselt wiedergegeben wird. Auch kann die Abhängigkeit darin bestehen, dass jeder Primärinformation bereits eine bestimmte Form zugeordnet ist und beim Auslesen der Primärinformation lediglich ein Abgleich mit einer entsprechenden Datenbank erfolgt.

Alternativ kann die Herstellung der Etiketten auch dergestalt erfolgen, dass zuerst individuelle Form des jeweiligen Etiketts ausgebildet wird und anschließend die Einbringung der Primärinformation erfolgt. Durch ein getaktetes Schieberegister innerhalb einer getakteten Maschine kann dann die richtige Zuordnung von Primärinformation und Form des Etiketts sichergestellt werden. Auch kann zunächst die individuelle Form mit Hilfe einer Kamera oder die Zusatzinformation ausgelesen werden und darauf hin die Einbringung der Primärinformation erfolgen.

Die individuelle Form des Etiketts wird in bevorzugter Ausgestaltung so ausgebildet, dass diese bzw. eine durch die Form codierte Zusatzinformation auch oder ausschließlich maschinenlesbar ist, beispielsweise mittels eines Photosensors, eines ggf. modifizierten Barcodelesers oder einer Kamera. Damit kann das Sicherheitsmerkmal der individuellen Etikettenform auch als Level-2- und/oder Level-3-Sicherheitsmerkmal fungieren. Des Weiteren kann nach der Einbringung der Zusatzinformation eine automatische Überprüfung erfolgen, dass die Ausbildung der Zusatzinformation erfolgreich war. Somit können Fehlproduktionen unmittelbar aussortiert werden.

Die Ausgestaltung der Etiketten mit individueller Form kann in weiter bevorzugter Ausgestaltung zudem mit einem tamper evident Effekt, also einem Effekt, der einen Erstöffnungsnachweis anzeigt, kombiniert werden. Der Erstöffnungsnachweis kann für alle Etiketten gleich ausgebildet sein, insbesondere kann der Erstöffnungsnachweis aber auch individuell für jedes Etikett ausgebildet werden und vorzugsweise mit der Zusatzinformation, die durch die individuelle Form des Etiketts bereitgestellt wird, korreliert werden. Durch eine Korrelation können die einzelnen Sicherheitsmerkmale besser gegen Fälschung oder Manipulation geschützt werden, da eine Fälschung oder Manipulation nur dann unentdeckt bleibt, wenn alle diese Merkmale gleichzeitig gefälscht werden. Der Erstöffnungsnachweise kann, wie dies grundsätzlich bekannt ist, durch einen geeigneten Schichtaufbau erfolgen. Hierzu wird beispielhaft auf die DE 100 30 596 A1 verwiesen

Wie bereits oben beschrieben wurde, wird in bevorzugter Ausgestaltung des Verfahrens die durch die individuelle Form bereitgestellte Zusatzinformation kodiert. Die Codierung kann beispielsweise durch die Einbringung einer barcodeähnlichen Kennzeichnung erfolgen. Eine weitere, bevorzugte Variante bildet eine Codierung durch eine gezielte Variation der Länge, der Breite und/oder der Längen- und Breitenverhältnisse von Etikett zu Etikett sowie ggf. auch innerhalb verschiedener Bereiche eines Etiketts. Unterschiedliche Längen und Breiten sind relativ einfach variierbar. Dennoch kann eine Vielzahl unterschiedlicher Informationen durch geeignete Codierung wiedergegeben werden.

Weiter bevorzugt weisen die einzelnen Etiketten eine leitfähige und/oder eine magnetische Schicht auf. Sofern die Zusatzinformation bei einer solchen Ausgestaltung durch eine Variation der Gesamtfläche oder durch eine Variation der Längen und Breiten des Etiketts codiert wird, kann die Zusatzinformation durch die leitfähige bzw. magnetische Schicht sodann kapazitiv oder magnetisch ausgelesen werden.

In weiter bevorzugter Ausgestaltung wird das Etikett bei der Ausbildung der äußeren Form zusätzlich mit einem haptisch wahrnehmbaren Merkmal versehen. Die Ausbildung kann beispielsweise durch eine geeignete Materialstärke des Etikettenmaterials und/oder durch eine Wulstbildung beim Schneiden der Etikettenbahn erfolgen, insbesondere wird als haptisches Merkmal also eine Änderung der Materialdicke innerhalb eines Etiketts vorgenommen. Vorzugsweise erstreckt sich ein haptisch wahrnehmbares Merkmal nicht über das gesamte Etikett sondern vielmehr nur in Teilbereichen.

Weitere Einzelheiten, Merkmale, Ziele und Vorteile der vorliegenden Erfindung werden nachfolgend anhand einer Zeichnung eines bevorzugten Ausführungsbeispiels näher erläutert. In der Zeichnung zeigt
- Fig. 1: die Bearbeitung einer Etikettenbahn in schematischer Darstellung,
- Fig. 2: die Etikettenbahn gemäß Fig. 1 im Querschnitt,
- Fig. 3: mehrere Etiketten mit unterschiedlicher Form,
- Fig. 4: alternative Ausgestaltungen von Etiketten.

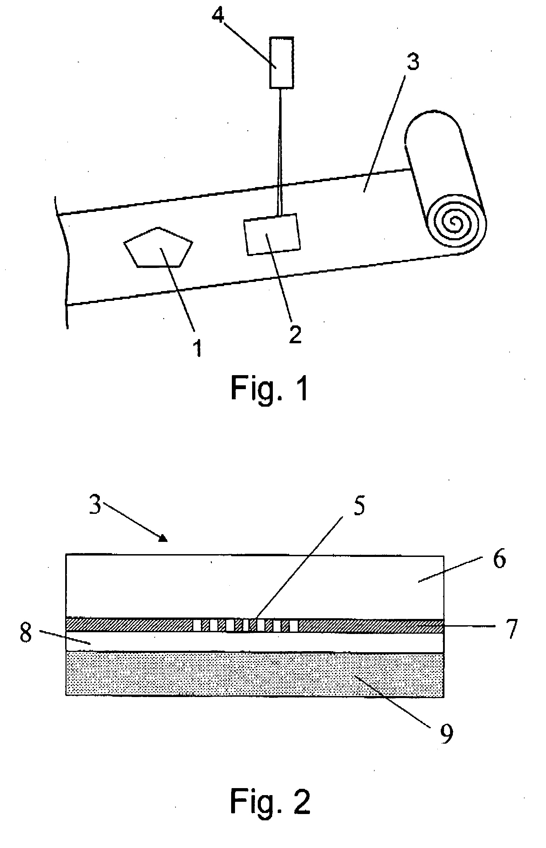

Fig.1 zeigt in schematischer Darstellung die Herstellung und Individualisierung von Etiketten 1, 2 aus einem Etikettenband 3. Bei dem Etikettenband 3 handelt es sich vorliegend um eine zu einer Rolle aufgewickelte mehrschichtige Folienanordnung, wie sie üblicherweise zur Herstellung von Etiketten verwendet wird. Alternativ eignen sich auch Etikettenbögen, aus denen mehrere Etiketten gewonnen werden können. Hinsichtlich des genaueren Schichtaufbaus des Etikettenbandes 3 wird auf die Beschreibung zu Fig. 2 verwiesen.

Bei der gezeigten Ausgestaltung wird zur Individualisierung der Etiketten 1, 2 das Etikettenband 3 abgewickelt und unter einem Laserlithographen 4 entlang geführt. Der Laserlithograph 4 bringt eine Primärinformation 5 in Form einer individuellen Beschriftung in das Etikettenband 3 ein und schneidet zudem das Etikettenband 3 zu einzelnen Etiketten 1, 2. Jedes dieser Etiketten 1, 2 weist eine individuelle äußere Form auf und ist somit individualisiert. Alternativ kann die Beschriftung des Etikettenbandes 3 bzw. der Etiketten 1, 2 auch vorher oder nachher erfolgen. Vorteilhaft ist aber eine Ausgestaltung bei der die Primärinformation und das Ausbilden der Etiketten 1, 2 mit demselben Gerät, insbesondere mit demselben Laserlithographen erfolgt.

Die Form der Etiketten 1, 2 ist hier und vorzugsweise nicht nur individuelle ausgestaltet, sondern gibt auch eine zusätzliche Information wieder. Diese Zusatzinformation ist mit der Primärinformation 5 der Etiketten 1, 2 korreliert, so dass hierdurch die Fälschungssicherheit zusätzlich erhöht wird. Dies trifft insbesondere dann zu, wenn wie vorliegend die Primärinformation 5 bereits einen hohen Sicherheitsstandard bietet. Der hohe Sicherheitsstandard der Primärinformation 5 wird vorliegend dadurch erzielt, dass die Primärinformation 5 jedenfalls teilweise als individualisiertes computergeneriertes Hologramm ausgebildet ist.

Fig. 2 zeigt die Etikettenbahn 3 in Form einer mehrschichtigen Folienanordnung im Querschnitt. Die Etikettenbahn 3 weist einen Etikettenträger 6 in Form einer Polyesterfolie mit einer Schichtdicke von etwa 100 µm auf. Unterhalb des Etikettenträgers 6 ist eine dünne Markierschicht 7 angeordnet, die vorliegend als Träger der Primärinformation 5 verwendet wird, in die also ein computergeneriertes Hologramm laserlithographisch eingeschrieben wird. Vorliegend bilden die Markierschicht 7 und der Etikettenträger 6 gemeinsam eine Informationsschichtanordnung. Es sind aber auch andere Ausgestaltungen, insbesondere mit weiteren Zwischenschichten denkbar.

Bei der Markierschicht 7 handelt es sich um eine Metallschicht, nämlich eine Aluminiumschicht, mit einer Schichtdicke von mehreren Nanometern, vorliegend etwa 5 nm. Unterhalb der Markierschicht 7 ist eine Klebeschicht 8, hier und vorzugsweise basierend auf einer Haftklebemasse, angeordnet mittels der die späteren Etiketten 1, 2 auf beliebigen Untergründen festlegbar sind. Zum Schutz der Klebeschicht 8 und zur Vereinfachung der Handhabung der späteren Etiketten 1,2 ist die Klebeschicht 8 mit einem temporären Releaseträger 9 versehen. In der Regel verbleibt der Releaseträger 9 dann bis zur Anbringung der Etiketten 1, 2 an gewünschter Stelle auf der Klebeschicht 8. Bei der Formgebung der Etiketten 1, 2 kann der Releaseträger 9 hierzu ebenfalls entsprechend geformt und durchtrennt werden. In diesem Fall kann ggf. noch ein weiterer Prozessträger unterhalb des Releaseträgers 9 während des Verfahrens zur Individualisierung vorgesehen sein.

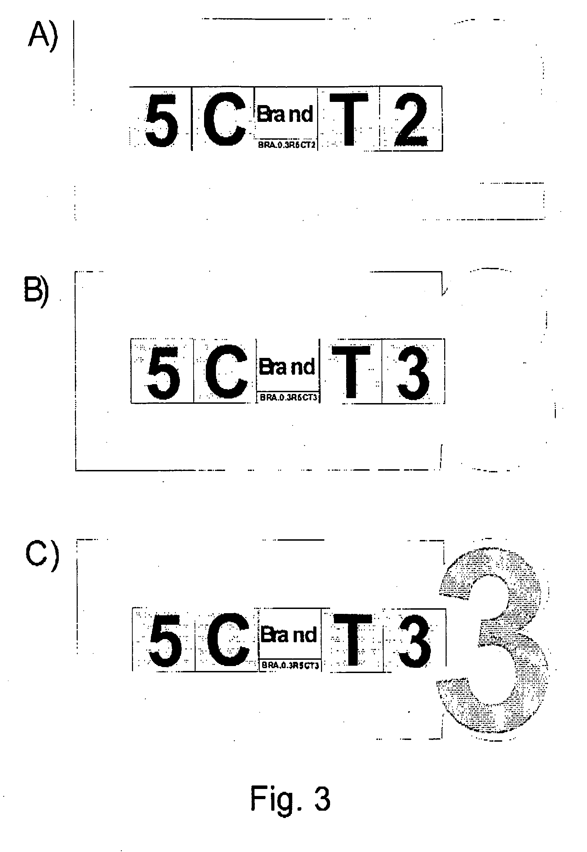

Fig. 3A, B zeigt individualisierte Etiketten 1, 2, die neben der individuelle Form eine Primärinformation 5 in Form von einer alphanumerischen Zeichenfolge kombiniert mit einem computergenerierten Hologramm aufweisen. Die dargestellten Ausführungsformen sind Ausführungsbeispiele, die ausnutzten, dass bei einer seriellen Durchnummerierung im Normalfall mind. die letzte Stelle von Markierung zu Markierung variiert und damit auch eine hierzu korrelierte Kontur des Etiketts 1,2. Bezüglich der Form der Etiketten ist erkennbar, dass die Kontur der rechten Kante des jeweiligen Etiketts 1, 2 die Kontur der letzten Stelle der alphanumerischen Zeichenfolge wiedergibt aufnimmt, vorliegend die Zahlen 2 bzw. 3. Um eine größere Vielfalt der Etiketten zu erzielen, kann selbstverständlich auch die äußere Kontur der vollständigen alphanumerischen Zeichenfolge wiedergegeben werden. Bei dem in Fig. 3C gezeigten Etikett wird die Wahrnehmung der äußeren Kontur noch dadurch verstärkt, dass der rechte Rand des Etiketts zusätzlich mit derselben Information, hier der Ziffer 3, beschriftet ist.

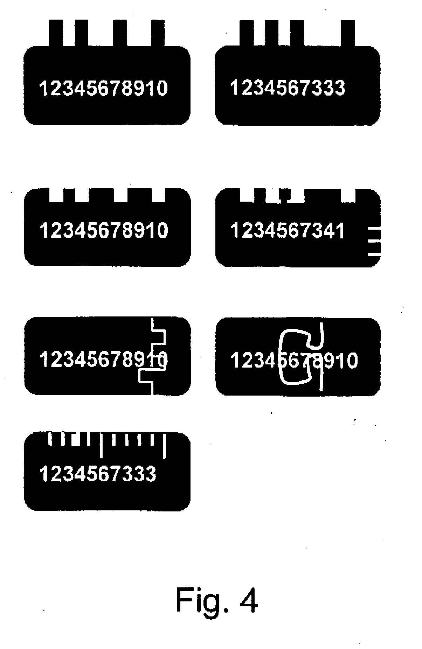

In Fig. 4 sind weitere Beispiele individualisierter Etiketten gezeigt. Hier wird nicht nur eine Korrelation zu einer eingeschriebenen Primärinformation 5, vorliegend einer Seriennummer realisiert. Vielmehr erfolgt darüber hinaus auch eine Codierung der in der Form des Etiketts hinterlegten Zusatzinformation. Eine einfache Form der Kodierung stellen z. B. seitliche Einschnitte oder Kerben in dem Etikett oder auch Ausnehmungen innerhalb eines Etiketts dar. Deren Anzahl kann beispielsweise mit der letzten Stelle der Seriennummer korrespondieren. Eine komplexere Codierung kann beispielsweise die Kerben zu nutzen, um z. B. eine binäre Darstellung der Seriennummer zu erreichen. 5 Kerben könnten beispielsweise die letzte Ziffer einer Seriennummer codieren: z.B. für 0 keine Kerbe, für 1 ----v, für 2 --v- für 3 ---vv, etc, wobei "v" für eine Kerbe an der jeweiligen Stelle steht. Es ist ebenfalls denkbar, dass man leicht erkennbare Formen nutzt, die mit der letzten Stelle der Seriennummer korrelieren: 0 entspricht beispielsweise einem rundem Etikett, 1 entspricht einem rechteckigem Etikett; 2 entspricht einem elliptischem Etikett, 3 entspricht einem dreieckigem Etikett, usw.

## Patentansprüche

1. Verfahren zur Individualisierung von Etiketten (1, 2),
bei dem in einem Etikettenband (3) eine Mehrzahl von Etiketten (1, 2) ausgebildet wird,
**dadurch gekennzeichnet,**
**dass** die Form eines jeden Etiketts (1, 2) individuell ausgebildet wird.

2. Verfahren nach Anspruch 1, **dadurch gekennzeichnet,**
**dass** in das Etikett (1, 2) eine Primärinformation (5), insbesondere in Form einer Bedruckung und/oder einer gespeicherten Information, eingebracht wird.

3. Verfahren nach Anspruch 1 oder 2, **dadurch gekennzeichnet,**
**dass** die individuelle Form eines Etiketts (1, 2) als Zusatzinformation ausgebildet wird,
vorzugsweise, dass die Zusatzinformation maschinenlesbar ausgebildet wird.

4. Verfahren nach Anspruch 2 oder 3, **dadurch gekennzeichnet,**
**dass** zunächst die Primärinformation (5) des Etiketts (1, 2) ausgelesen und anschließend die Zusatzinformation ausgebildet wird.

5. Verfahren nach einem der Ansprüche 2 bis 4, **dadurch gekennzeichnet,**
**dass** die Primärinformation (5) und die Zusatzinformation korreliert werden.

6. Verfahren nach einem der Ansprüche 3 bis 5, **dadurch gekennzeichnet,**
**dass** die Zusatzinformation kodiert wird,
vorzugsweise, dass die Zusatzinformation durch die Länge und/oder Breite des Etiketts (1, 2) und/oder durch verschiedene Längen- und/oder Breitenverhältnisse des Etiketts (1, 2) kodiert wird.

7. Verfahren nach Anspruch 6, **dadurch gekennzeichnet,**
**dass** die Zusatzinformation durch eine maschinenlesbare Struktur, insbesondere an Rand oder Rändern des Etiketts (1, 2), kodiert wird und/oder dass die Zusatzinformation durch die Gesamtfläche des Etiketts (1, 2) kodiert wird.

8. Verfahren nach Anspruch 6 oder 7, **dadurch gekennzeichnet,**
**dass** das Etikett.(1, 2) eine leitfähige und/oder eine magnetische Schicht aufweist und dass die Zusatzinformation kapazitiv und/oder magnetisch auslesbar ausgebildet wird.

9. Verfahren nach einem der vorhergehenden Ansprüche, **dadurch gekennzeichnet,**
**dass** die Form des Etiketts (1, 2) laserlithographisch ausgebildet wird, vorzugsweise, dass sowohl die Primärinformation (5) als auch die Zusatzinformation laserlithographisch in das Etikett (1, 2) eingebracht werden.

10. Verfahren nach einem der vorhergehenden Ansprüche, **dadurch gekennzeichnet,**
**dass** die individuelle Form des Etiketts (1, 2) als Level-2-Sicherheitsmerkmal und/oder als Level-3-Sicherheitsmerkmal ausgebildet wird.

11. Verfahren nach einem der vorhergehenden Ansprüche, **dadurch gekennzeichnet,**
**dass** das Etikett (1, 2) mit einem Erstöffnungsnachweis ausgebildet wird, vorzugsweise, dass der Erstöffnungsnachweis mit der Zusatzinformation korreliert wird.

12. Etikett, insbesondere hergestellt gemäß einem der Ansprüche 1 bis 11, aufweisend eine Informationsschichtanordnung, in die Information - Primärinformation (5) - eingeschrieben oder einschreibbar ist,
**dadurch gekennzeichnet,**
**dass** das Etikett (1, 2) eine individuelle Form aufweist, und dass die individuelle Form Träger einer zusätzlichen Information -Zusatzinformation - ist.

13. Etikett nach Anspruch 12, **dadurch gekennzeichnet,**
**dass** die Zusatzinformation teilweise oder vollständig ohne Hilfsmittel auslesbar ist.

14. Etikett nach Anspruch 12 oder 13, **dadurch gekennzeichnet,**
**dass** die Zusatzinformation teilweise oder vollständig codiert ist.

15. Etikett nach einem der Ansprüche 12 bis 14, **dadurch gekennzeichnet,**
**dass** die Primärinformation (5) mit der Zusatzinformation korreliert ist, vorzugsweise, dass die Korrelation zwischen Primärinformation (5) und Zusatzinformation **dadurch** erzielt ist, dass die Zusatzinformation jedenfalls teilweise die Kontur der Primärinformation (5) wiedergibt.

16. Etikett nach einem der Ansprüche 12 bis 15, **dadurch gekennzeichnet,**
**dass** die Zusatzinformation zumindest teilweise durch Ausnehmungen in dem Etikett (1, 2) ausgebildet ist.

17. Etikett nach einem der Ansprüche 12 bis 16, **dadurch gekennzeichnet,**
**dass** die Primärinformation (5) zumindest teilweise oberflächlich in die Informationsschichtanordnung ein- oder auf diese aufgebracht ist und/oder dass die Primärinformation (5) zumindest teilweise in das Volumen der Informationsschichtanordnung eingebracht ist.

18. Etikett nach einem der Ansprüche 12 bis 17, **dadurch gekennzeichnet,**
**dass** die Primärinformation (5) ein diffraktives Element, insbesondere ein computergeneriertes Hologramm, aufweist.

19. Etikett nach einem der Ansprüche 12 bis 18, **dadurch gekennzeichnet,**
**dass** die Primärinformation (5) als Laserbeschriftung ausgebildet ist, vorzugsweise, dass sowohl Primärinformation (5) als auch Zusatzinformation laserlithographisch in das Etikett (1, 2) eingeschrieben sind.

20. Etikett nach einem der Ansprüche 12 bis 19, **dadurch gekennzeichnet,**
**dass** Selbiges eine Klebeschicht (8) aufweist und als selbstklebendes Etikett (1, 2) oder als heißsiegelfähiges Etikett (1, 2) ausgebildet ist.
